# EUROPEAN PATENT APPLICATION

(11) **EP 4 657 124 A1**
(43) Date of publication of application: **03.12.2025**
(21) Application number: 25177268.7
(22) Date of filing: 19.05.2025
(51) Int. Cl.: G02B 5/00, B82Y 20/00

(54) **MICROSTRUCTURE WITH HIGH BONDING STRENGTH AND FORMATION METHOD THEREOF**

(30) Priority: 31.05.2024 TW 113120240
(71) Applicant: Geeder company Limited, Taichung City 42055 (TW)
(72) Inventor: TSUNG, Cheng-Sheng, 42055 Taichung City (TW); HUNG, Shao-Wen, 42055 Taichung City (TW)
(74) Representative: Viering, Jentschura & Partner mbB Patent- und Rechtsanwälte

(57) **Abstract**

A microstructure with high bonding strength includes a substrate, a deposition layer, and a first dielectric layer. The substrate has a first surface. The first surface has a covered area and an exposed area. The deposition layer has a plurality of nanoscale metal particles. The deposition layer is disposed on the covered area of the first surface. The exposed area is exposed from the deposition layer. The deposition layer has a bonding face on one side away from the first surface. The first dielectric layer is disposed on the bonding face and contacts the exposed area. With the connection structure between the first dielectric layer and the exposed area of the substrate, a hotspot structure formed by the deposition layer and the first dielectric layer is more stably fixed to the substrate, thereby improving bonding strength of the overall structure.

## Description

### BACKGROUND OF THE INVENTION

### 1. Field of the Invention:

The present invention relates to a microstructure and formation method thereof, and more particularly, to a microstructure with high bonding strength and formation method thereof.

### 2. Description of the Related Art:

In the current field of photoelectricity, many photoelectric products (such as solar cell systems, optical sensor structures, biosensors, etc.) utilize microstructures capable of forming surface plasmas to enhance the overall performance of photoelectric products.

Currently existing microstructures are typically stacked structures formed by multiple stacked up structural layers. However, in such microstructures, the structural layers are combined in a heterogeneous contact manner, causing a lower combination stability between the structural layers, such that the microstructure is subject to issues such as low overall structural strength and short service life, as well as consumption of plasmons energy, leading to an unstable and inadequate performance. Such issues seriously impact the effectiveness of products, and may also reduce product yield during manufacturing process, adding unnecessary costs.

### SUMMARY OF THE INVENTION

The present invention aims at resolving the issues of the conventional microstructure having low overall structural strength and short service life.

To achieve the objectives above, an embodiment of the present invention provides a microstructure with high bonding strength, comprising a substrate, a deposition layer, and a first dielectric layer. The substrate has a first surface; the first surface has a covered area and an exposed area. The deposition layer has a plurality of nanoscale metal particles. The deposition layer is disposed on the covered area of the first surface. The exposed area is exposed from the deposition layer. The deposition layer has a bonding face on one side thereof away from the first surface. The first dielectric layer is disposed on the bonding face and contacts the exposed area.

In another embodiment of the present invention, the nanoscale metal particles form a crystal themselves or in interaction with surrounding substance molecules. A surface plasmon polariton is generated on the surface of the nanoscale metal particles. Also, a Tamm plasmon polariton is formed at the interface or lattice discontinuities within the crystal. The surface plasmon polariton and the Tamm plasmon polariton resonate to create an optical Tamm state.

In another embodiment, the nanoscale metal particles of the covered area form a hotspot structure with the first dielectric layer and the substrate through eutectic and bonding. The first dielectric layer of the exposed area is connected with the substrate by contacting the substrate to form a connection structure.

In an embodiment of the present invention, a method of forming a microstructure with high bonding strength is provided, comprising following steps: a substrate providing step: providing a substrate, a first surface of the substrate having a covered area and an exposed area; a deposition layer forming step: forming a deposition layer having a plurality of nanoscale metal particles on the covered area of the first surface, so that the exposed area is exposed from the deposition layer, wherein the deposition layer is formed through a method selected from a group consisting of spray coating, immersion coating, blade coating, roll coating, adsorption, and spin coating; and a first dielectric layer forming step: forming a first dielectric layer on a bonding face of the deposition layer away from the first surface, so that the first dielectric layer is connected with the exposed area.

In another embodiment of the present invention, in the first dielectric layer forming step, the nanoscale metal particles of the covered area form a hotspot structure with the first dielectric layer and the substrate through eutectic and bonding. The first dielectric layer of the exposed area is connected with the substrate by contacting the substrate to form a connection structure.

In another embodiment of the present invention, another method of forming a microstructure with high bonding strength is provided, comprising following steps: a substrate providing step: providing a substrate, the substrate having a first surface; a deposition layer forming step: forming a deposition layer having a plurality of nanoscale metal particles on the first surface of the substrate, wherein the deposition layer is formed through a method selected from a group consisting of physical vapor deposition (PVD) and chemical vapor deposition (CVD); and a first dielectric layer forming step: forming a first dielectric layer on a bonding face of the deposition layer away from the first surface, and forming an exposed area exposed from the deposition layer on the first surface through a high-energy destruction method, so that the first dielectric layer is connected with the exposed area.

In another embodiment of the present invention, in the first dielectric layer forming step, the nanoscale metal particles of the covered area form a hotspot structure with the first dielectric layer and the substrate through eutectic and bonding. The first dielectric layer of the exposed area is connected with the substrate by contacting the substrate to form a connection structure.

With such configuration of the present invention, the connection structure between the first dielectric layer and the exposed area of the substrate allows the hotspot structure formed by the deposition layer and the first dielectric layer to be more stably fixed to the substrate. Also, due to the eutectic and bonding involving the nanoscale metal particles and the dielectric layer material, the connection structure and the hotspot structure are more stable, thereby achieving the objective of improving the bonding strength of the overall structure.

Also, the nanoscale metal particles within the deposition layer and the material of the first dielectric layer form a large number of crystals to form the hotspot structure. The nanoscale metal particles are capable of generating surface plasmon polaritons, and Tamm plasmon polaritons are formed at interfaces or lattice discontinuities within the crystals, so that the primary generation areas of the surface plasmon polaritons and the Tamm plasmon polaritons, such that the framework of the connection structure and the hotspot structure form a more stable optical Tamm state, which leads to increased efficiency in light emission or light detection. Additionally, the gradual decrease in the metal density within the hotspot structure from the inside toward the outside allows a directional release of energy of the optical Tamm state from the areas with high metal content to those with low metal content, significantly reducing energy consumption caused by non-directionality, thereby maximizing the structural malleability.

### BRIEF DESCRIPTION OF THE DRAWINGS

**Fig. 1** is a sectional view of the microstructure with high bonding strength in accordance with an embodiment of the present invention.
**Fig. 2** is a sectional view of the microstructure with high bonding strength in accordance with another embodiment of the present invention, illustrating the substrate having a substrate layer and a second dielectric layer.
**Fig. 3** is a partially perspective view of the microstructure with high bonding strength in accordance with an embodiment of the present invention, illustrating the exposed area exposed from the deposition layer.
**Fig. 4** is a flow chart of the formation method of the microstructure with high bonding strength in accordance with an embodiment of the present invention.
**Fig. 5** is a flow chart of the formation method of the microstructure with high bonding strength in accordance with an embodiment of the present invention, illustrating a further included reaction step.
**Fig. 6** is a sectional view of the microstructure with high bonding strength in accordance with another embodiment of the present invention.
**Fig. 7** a sectional view of the microstructure with high bonding strength in accordance with another embodiment of the present invention, illustrating the substrate having a substrate layer and a second dielectric layer.
**Fig. 8** is a partially perspective view of the microstructure with high bonding strength in accordance with another embodiment of the present invention, illustrating the exposure bore of the deposition layer.
**Fig. 9****.** is a flow chart of the formation method of the microstructure with high bonding strength in accordance with a second embodiment of the present invention.
**Fig. 10** is a flow chart of the formation method of the microstructure with high bonding strength in accordance with the second embodiment of the present invention, illustrating a further included reaction step.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

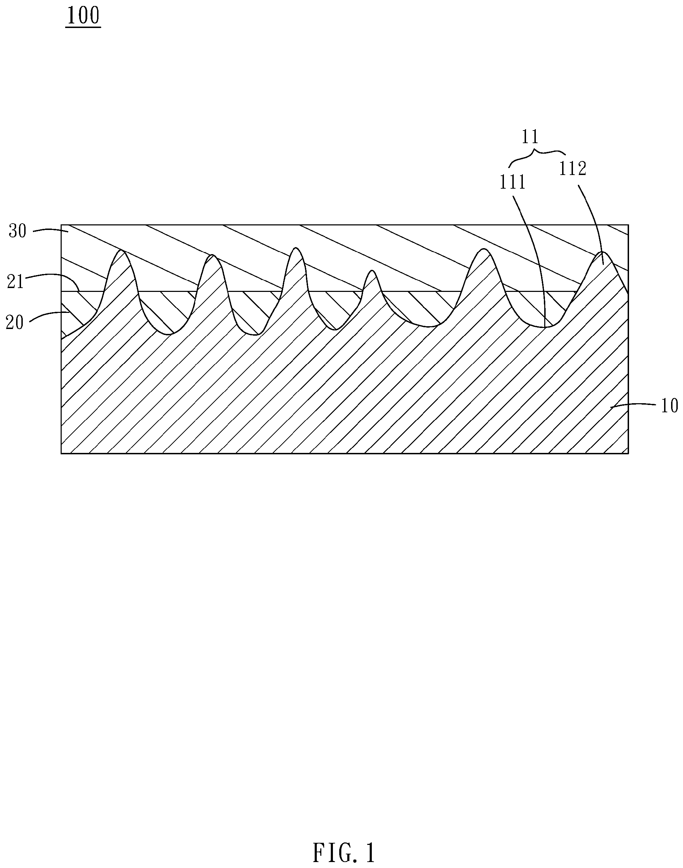

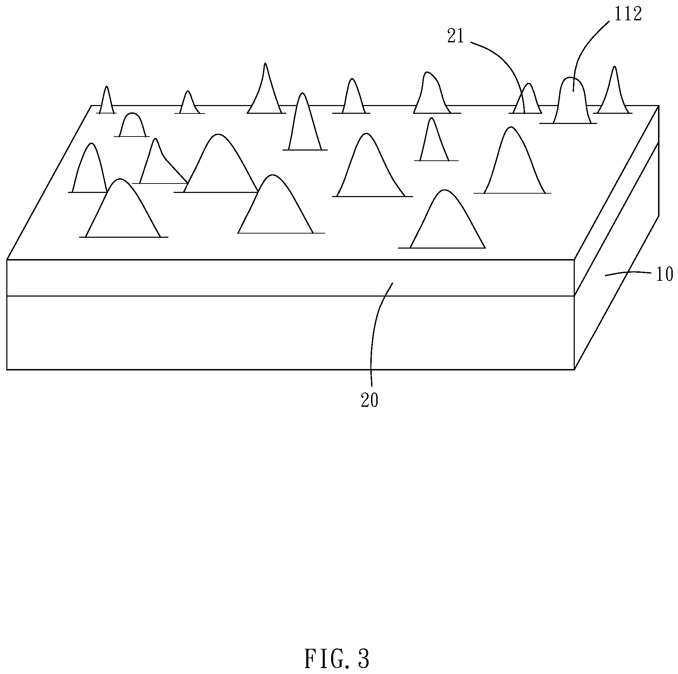

Referring to **Fig. 1** to **Fig. 3****,** the present invention discloses a microstructure **100** with high bonding strength, comprising a substrate **10,** a deposition layer **20,** and a first dielectric layer **30.**

The substrate **10** comprises a first surface **11.** The first surface **11** comprises a covered area **111** and an exposed area **112.** Therein, the substrate **10** is formed of material selected from, for example but not limited to, gallium nitride, aluminum oxide, silicon, and silicon oxide. The material of the substrate **10** is also allowed to be selected based on the intended application, such as for solar cells, optical sensors, light-emitting diodes, or other optoelectronic components, or as a base for single or composite film layers. Notably, in order to emphasize the structural differences between the covered area **111** and the exposed area **112,** the height differences and sharpness depicted for showing the covered area 111 and the exposed area **112** in **Fig. 1** to **Fig. 3** are for illustrative purposes only. In reality, the shapes of those areas may be flatter, and the exposed area **112** may also be a raised flat area. However, it should be understood that as long as there is a height difference between the covered area **111** and the exposed area **112,** the depiction fulfills the definition in this embodiment.

The deposition layer **20** comprises a plurality of nanoscale metal particles. The deposition layer **20** is disposed on the covered area **111** of the first surface **11.** The exposed area **112** is exposed from the deposition layer **20.** The deposition layer **20** has a bonding face **21** on one side thereof away from the first surface **11.** Therein, the nanoscale metal particles are allowed to be nanoscale metallic materials or metallic compound materials. The metallic materials are allowed to be metals, such as gold, silver, copper, iron, platinum, palladium, aluminum, titanium, vanadium, chromium, nickel, tantalum, tungsten, tin, gallium, cobalt, lithium, sodium, magnesium, calcium, and others. The metallic compound materials are allowed to be conductive metal oxides, such as gallium arsenide, indium phosphide, indium oxide, indium tin oxide, indium gallium zinc oxide, fluorine-doped tin oxide, silicon-doped zinc oxide, and others. In addition, in another embodiment, the deposition layer **20** is also allowed to be formed from multiple nanoscale metal films stacked up.

The first dielectric layer **30** is disposed on the bonding face **21** and contacts the exposed area **112.** Therefore, the connection between the first dielectric layer **30** and the exposed area **112** of the substrate **10** allows the deposition layer **20** to be more stably fixed between the substrate **10** and the first dielectric layer **30,** so as to form the microstructure **100** with high bonding strength of the present invention.

In an embodiment of the present invention, the nanoscale metal particles in the deposition layer **20** form a crystal themselves or in interaction with surrounding substance molecules. The surrounding substance molecules are allowed to be, for example, the substrate **10** or the first dielectric layer **30.** A surface plasmon polariton (SPP) is generated on the surface of the nanoscale metal particles. Also, a Tamm plasmon polariton (TPP) is formed at the interface or lattice discontinuities within the crystal. The surface plasmon polariton and the Tamm plasmon polariton resonate to create an optical Tamm state (OTS).

Referring to **Fig. 1** to **Fig. 6****,** in an embodiment, the nanoscale metal particles of the covered area **111** form a hotspot structure **40** with the first dielectric layer **30** and substrate **10** through eutectic and bonding. The first dielectric layer **30** of the exposed area **112** contacts the substrate **10** to form a connection structure **50.**

Therein, using the gradient variation in the metal content caused by the covered area **111** and the exposed area **112,** the primary generation areas of the surface plasmon polaritons and the Tamm plasmon polaritons are confined, and the framework of the hotspot structure **40** forms a more stable optical Tamm state. Also, the gradual decrease in the gradient of metal content within the hotspot structure **40** from the inside toward the outside allows a directional release of energy of the optical Tamm state from the areas with high metal content to those with low metal content, significantly reducing energy consumption caused by non-directionality, thereby maximizing the structural malleability.

Furthermore, the size of the connection structure **50** varies according to the size of the exposed area **112.** When the concentration of the nanoscale metal particles of the deposition layer **20** is lower, the deposition layer **20** is formed with smaller thickness and the measure of area of the exposed area **112** is larger. Therefore, the contact area between the first dielectric layer **30** and the substrate **10** is larger, causing the connection structure **50** to form a larger number of smaller-sized thin pillar structures. When the concentration of the nanoscale metal particles of the deposition layer **20** is higher, the deposition layer **20** is formed with larger thickness and the measure of area of the exposed area **112** is smaller. Therefore, the contact area between the first dielectric layer **30** and the substrate **10** is smaller, causing the connection structure **50** to form a smaller number of larger-sized thick pillar structures. Thus, the connection structure **50** allows the structure of the present invention to have a higher structural strength and malleability.

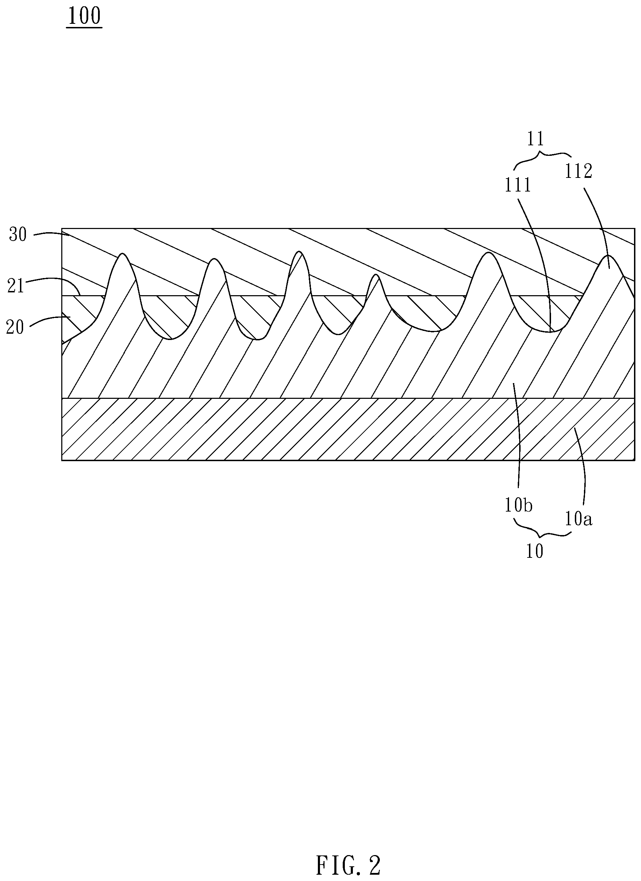

In another embodiment of the present invention, referring to **Fig. 2****,** the substrate **10** comprises a substrate layer **10a** and a second dielectric layer **10b.** The second dielectric layer **10b** is disposed on one side of the substrate layer **10a** in adjacent to the deposition layer **20.** The second dielectric layer **10b** comprises a first surface **11 on** one side away from the substrate layer **10a.** The exposed area **112** of the second dielectric layer **10b** is connected with the first dielectric layer **30.** Therefore, because the first dielectric layer **30** and the second dielectric layer **10b** are allowed to be formed with same material, the first dielectric layer **30** and the second dielectric layer **10b** have a higher bonding strength, further enhancing the structural strength of the present invention. Also, the nanoscale metal particles of the deposition layer **20** are able to move toward the first dielectric layer **30** and the second dielectric layer **10b,** respectively, so as to form a broader range of the optical Tamm state structure.

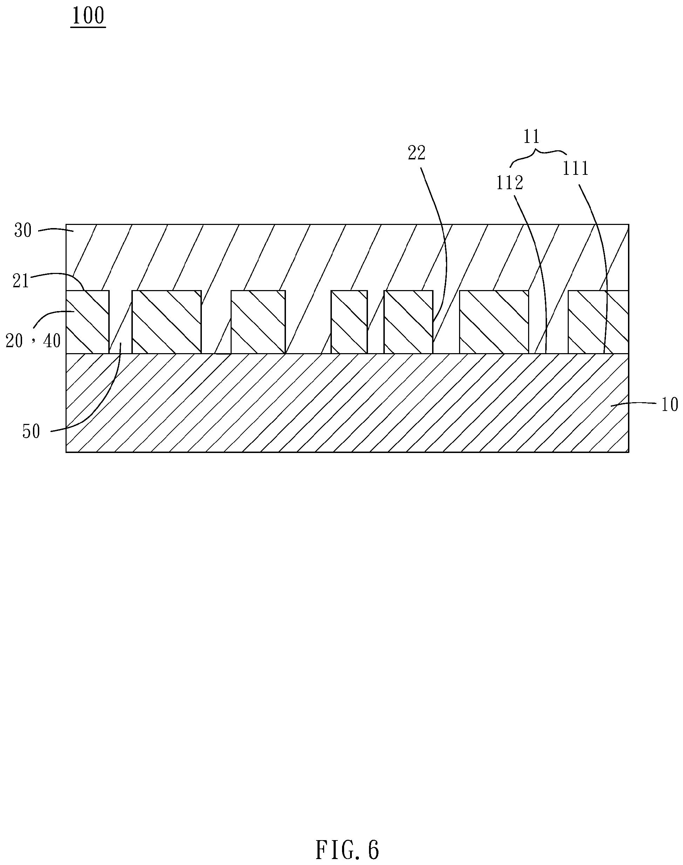

Also, referring to **Fig. 2** and **Fig. 6****,** the nanoscale metal particles of the covered area **111** form the hotspot structure **40** with the first dielectric layer **30** and the second dielectric layer **10b** through eutectic and bonding. The first dielectric layer **30** of the exposed area **112** contacts the second dielectric layer **10b** to form the connection structure **50.**

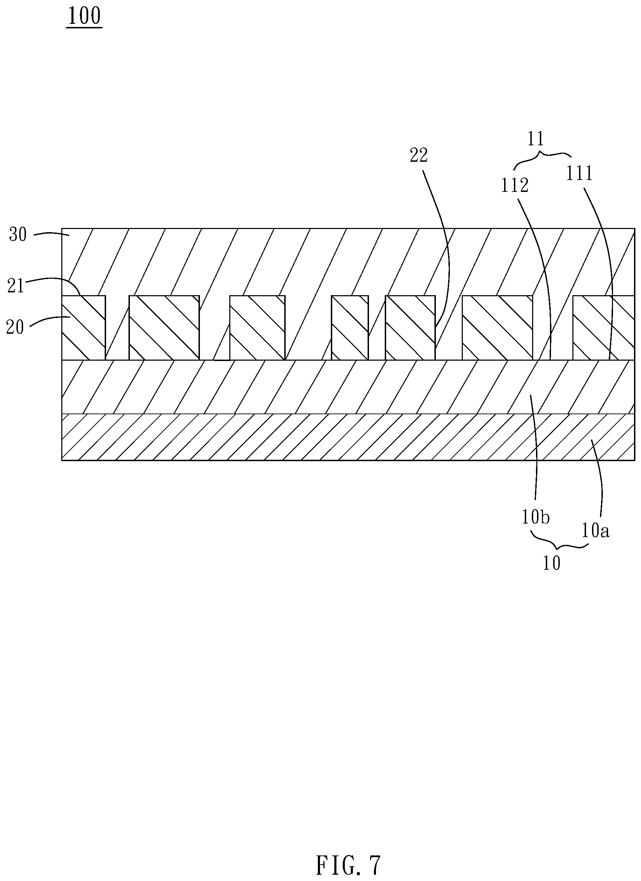

Furthermore, referring to **Fig. 6** to **Fig. 8****,** in another embodiment, if the first surface **11** of the substrate **10** is formed in a flat shape, the deposition layer **20** has multiple exposure bores **22.** The exposure bores **22** allow parts of the first surface **11** to be exposed from the deposition layer **20,** so as to form the exposed area **112.** The first dielectric layer **30** is filled in the exposure bores **22** and connected with the exposed area **112** to form the microstructure **100** with high bonding strength of the present invention. With such configuration, the additional sidewall areas of the exposure bores **22** further facilitate the eutectic and bonding between the nanoscale metal particles of the deposition layer **20** and the dielectric material of the first dielectric layer **30,** thereby increasing the bonding strength.

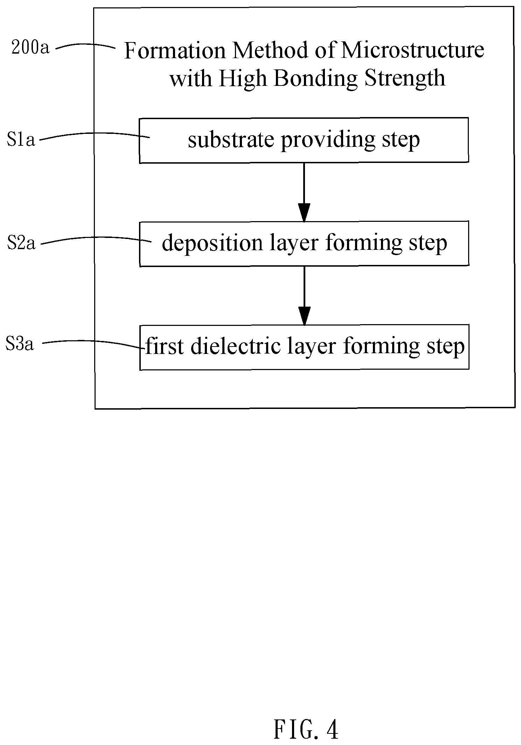

Referring to **Fig. 4** to **Fig. 5****,** to manufacture the aforementioned microstructure **100,** the present invention provides a formation method **200a** of the microstructure **100** with high bonding strength, comprising a substrate providing step **S1a**, a deposition layer forming step **S2a,** and a first dielectric layer forming step **S3a.**

In the substrate providing step **S1a**, the substrate **10** is provided. The first surface **11** of the substrate **10** comprises the covered area **111** and the exposed area **112.** Therein, the substrate **10** is formed of material selected from, for example but not limited to, gallium nitride, aluminum oxide, silicon, and silicon oxide. The material of the substrate **10** is also allowed to be selected based on the intended application, such as for solar cells, optical sensors, light-emitting diodes, or other optoelectronic components, or as a base for single or composite film layers.

In the deposition layer forming step **S2a,** the deposition layer **20** comprising the plurality of nanoscale metal particles is formed on the covered area **111** of the first surface **11,** so that the exposed area **112** is exposed from the deposition layer **20.** Therein, the deposition layer **20** is formed through a method selected from a group consisting of spray coating, immersion coating, blade coating, roll coating, adsorption, and spin coating. With such method, during the formation process of the deposition layer **20,** the exposed area **112** is directly exposed and prevented from being covered by the deposition layer **20.**

In the embodiment of the present invention, the nanoscale metal particles are allowed to be nanoscale metallic materials or metallic compound materials. The metallic materials are allowed to be metals, such as gold, silver, copper, iron, platinum, palladium, aluminum, titanium, vanadium, chromium, nickel, tantalum, tungsten, tin, gallium, cobalt, lithium, sodium, magnesium, calcium, and others. The metallic compound materials are allowed to be conductive metal oxides, such as gallium arsenide, indium phosphide, indium oxide, indium tin oxide, indium gallium zinc oxide, fluorine-doped tin oxide, silicon-doped zinc oxide, and others.

In the first dielectric layer forming step **S3a,** the first dielectric layer **30** is formed on the bonding face **21** of the deposition layer **20** away from the first surface **11,** and the first dielectric layer **30** is connected with the exposed area **112.** Therein, pillar-shaped crystals are formed in the connection parts between the first dielectric layer **30** and the exposed area **112.** Therefore, the pillar-shaped crystals improve the structure strength of the present invention.

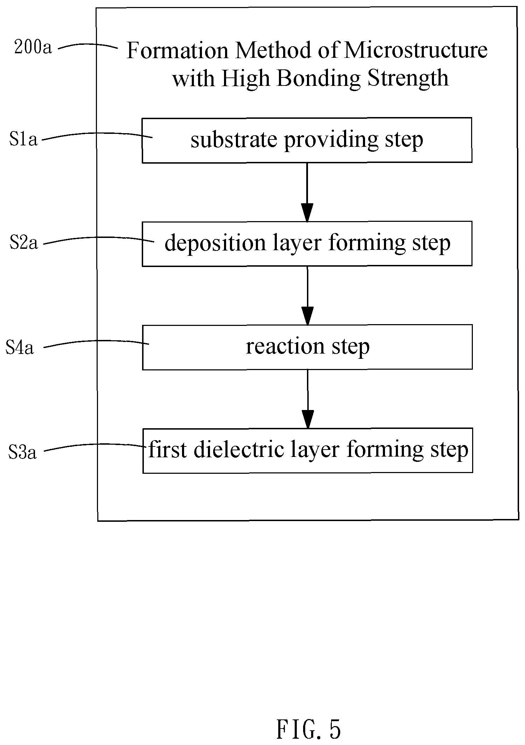

Referring to **Fig. 5****,** in the embodiment of the present invention, after the deposition layer forming step **S2a** or the first dielectric layer forming step **S3a,** a reaction step **S4a** is further included. In the reaction step **S4a,** the nanoscale metal particles form the crystal themselves or in interaction with surrounding substance molecules. The surface plasmon polariton is generated on the surface of the nanoscale metal particles. Also, the Tamm plasmon polariton is formed at the interface or lattice discontinuities within the crystal. The surface plasmon polariton and the Tamm plasmon polariton resonate to create an optical Tamm state.

Referring to **Fig. 1** **,** **Fig. 4****,** and **Fig. 6****,** in the embodiment of the present invention, in the first dielectric layer forming step **S3a,** the nanoscale metal particles of the covered area **111** form the hotspot structure **40** with the first dielectric layer **30** and the substrate **10** through eutectic and bonding. The first dielectric layer **30** of the exposed area **112** contacts the substrate **10** to form the connection structure **50.**

Also, in another embodiment of the present invention, in the substrate providing step **S1a**, the substrate **10** comprises the substrate layer **10a** and the second dielectric layer **10b.** The second dielectric layer **10b** comprises the first surface **11** on one side away from the substrate layer **10a.** In the first dielectric layer forming step **S3a,** the first dielectric layer **30** is connected with the exposed area **112** of the second dielectric layer **10b.** Therefore, because the first dielectric layer **30** and the second dielectric layer **10b** are allowed to be formed with same material, the first dielectric layer **30** and the second dielectric layer **10b** have a higher bonding strength, further enhancing the structural strength of the present invention. The hotspot structure **40** is formed of the nanoscale metal particles of the covered area **111,** the first dielectric layer **30,** and the second dielectric layer **10b** through eutectic and bonding. The connection structure **50** is formed by the contact combination of the first dielectric layer **30** and the second dielectric layer **10b** in the exposed area **112.**

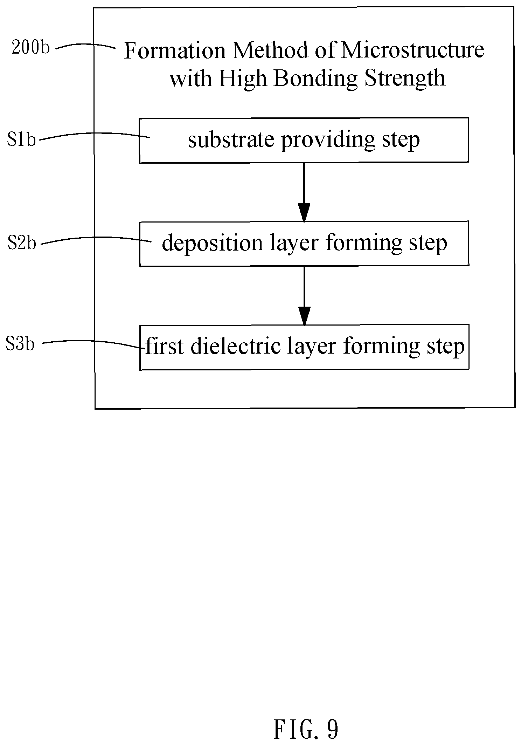

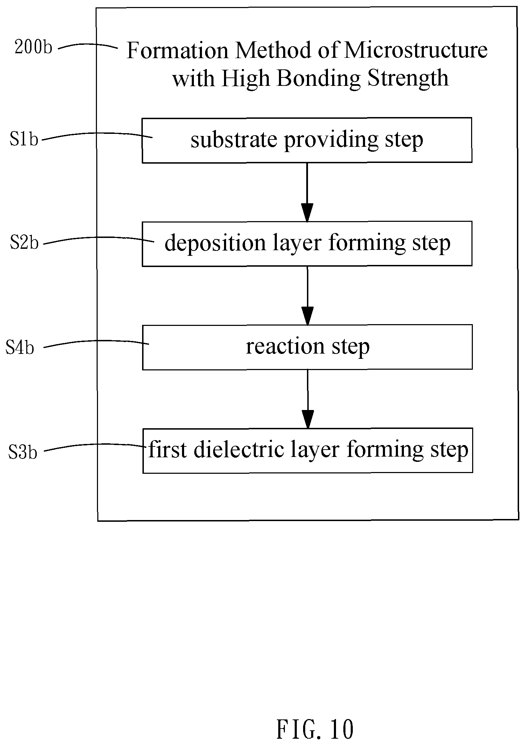

Referring to **Fig. 9** and **Fig. 10****,** the present invention provides another formation method **200b** of the microstructure **100** with high bonding strength, comprising a substrate providing step **S1b,** a deposition layer forming step **S2b,** and a first dielectric layer forming step **S3b.**

In the substrate providing step **S1b,** the substrate **10** is provided. The substrate **10** has the first surface **11.** Therein, the substrate **10** is formed of material selected from, for example but not limited to, gallium nitride, aluminum oxide, silicon, and silicon oxide. The material of the substrate **10** is also allowed to be selected based on the intended application, such as for solar cells, optical sensors, light-emitting diodes, or other optoelectronic components, or as a base for single or composite film layers.

In the deposition layer forming step **S2b,** the deposition layer **20** comprising the plurality of nanoscale metal particles is formed on the first surface **11.** Therein, the deposition layer **20** is formed through a method selected from physical vapor deposition (PVD) and chemical vapor deposition (CVD). Accordingly, the deposition layer **20** completely covers the first surface **11** of the substrate **10.**

In the embodiment of the present invention, the nanoscale metal particles are allowed to be nanoscale metallic materials or metallic compound materials. The metallic materials are allowed to be metals, such as gold, silver, copper, iron, platinum, palladium, aluminum, titanium, vanadium, chromium, nickel, tantalum, tungsten, tin, gallium, cobalt, lithium, sodium, magnesium, calcium, and others. The metallic compound materials are allowed to be conductive metal oxides, such as gallium arsenide, indium phosphide, indium oxide, indium tin oxide, indium gallium zinc oxide, fluorine-doped tin oxide, silicon-doped zinc oxide, and others.

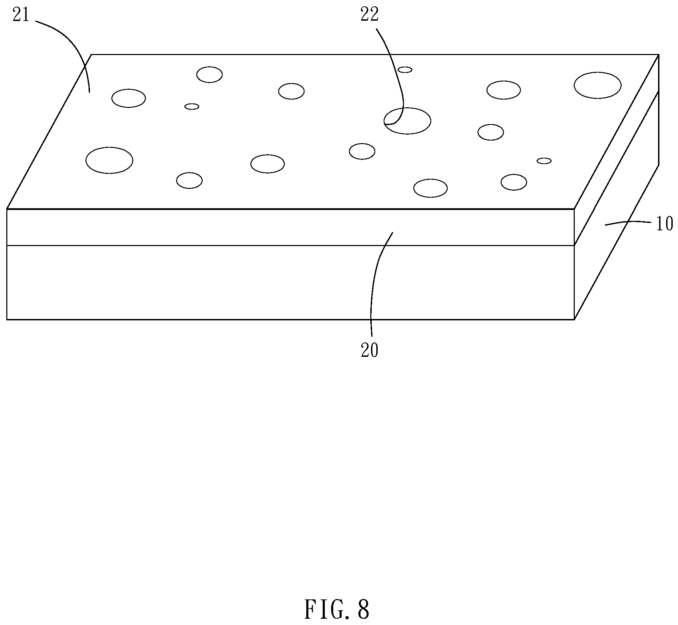

In the first dielectric layer forming step **S3b,** the first dielectric layer **30** is formed on the bonding face **21** of the deposition layer **20** away from the first surface **11,** and the exposed area **112** is formed on the first surface **11** through a high-energy destruction method to be exposed from the deposition layer **20,** so that the first dielectric layer **30** is connected with the exposed area **112.** Therein, the height of the exposed area **112** formed through the high-energy destruction method is lower than the height of the deposition layer **20,** so that the deposition layer **20** contains multiple bores (as shown by **Fig. 8**).

Furthermore, the exposed area **112** formed by high-energy destruction method is allowed to be formed by simply using the high-energy particles in the first dielectric layer **30** through the method of cohesion, bombardment, or activation. Alternatively, the exposed area **112** is allowed to be formed by using the high-energy particles together with the dielectric material in the first dielectric layer **30** through the method of cohesion, bombardment, or activation.

Referring to **Fig. 6** and **Fig. 9****,** in the embodiment of the present invention, in the first dielectric layer forming step **S3b,** the nanoscale metal particles of the covered area **111** form the hotspot structure **40** with the first dielectric layer **30** and the substrate **10** through eutectic and bonding. The first dielectric layer **30** of the exposed area **112** contacts the substrate **10** to form the connection structure **50.**

Furthermore, referring to **Fig. 6** to **Fig. 8****,** in another embodiment, if the first surface **11** of the substrate **10** is formed in a flat shape, in the first dielectric layer forming step **S3b,** the deposition layer **20** is provided with multiple exposure bores **22** formed through the high-energy destruction method. The exposure bores **22** allow parts of the first surface **11** to be exposed from the deposition layer **20,** so as to form the exposed area **112.** The first dielectric layer **30** is filled in the exposure bores **22** and connected with the exposed area **112** to form the microstructure **100** with high bonding strength of the present invention. With such configuration, the additional sidewall areas of the exposure bores **22** further facilitate the eutectic and bonding between the nanoscale metal particles of the deposition layer **20** and the dielectric material of the first dielectric layer **30,** thereby increasing the bonding strength.

Referring to **Fig. 10****,** in the embodiment of the present invention, after the deposition layer forming step **S2b** or the first dielectric layer forming step **S3b,** a reaction step **S4b** is further included. In the reaction step **S4b,** the nanoscale metal particles form the crystal themselves or in interaction with surrounding substance molecules. The surface plasmon polariton is generated on the surface of the nanoscale metal particles. Also, the Tamm plasmon polariton is formed at the interface or lattice discontinuities within the crystal. The surface plasmon polariton and the Tamm plasmon polariton resonate to create an optical Tamm state.

Also, in another embodiment of the present invention, in the substrate providing step **S1b,** the substrate **10** comprises the substrate layer **10a** and the second dielectric layer **10b.** The second dielectric layer **10b** comprises the first surface **11 on** one side away from the substrate layer **10a.** In the first dielectric layer forming step **S3b,** the first dielectric layer **30** is connected with the exposed area **112** of the second dielectric layer **10b.** Therefore, because the first dielectric layer **30** and the second dielectric layer **10b** are allowed to be formed with same material, the first dielectric layer **30** and the second dielectric layer **10b** have a higher bonding strength, further enhancing the structural strength of the present invention. The hotspot structure **40** is formed of the nanoscale metal particles of the covered area **111,** the first dielectric layer **30,** and the second dielectric layer **10b** through eutectic and bonding. The connection structure **50** is formed by the contact combination of the first dielectric layer **30** and the second dielectric layer **10b** in the exposed area **112.**

For example, if the present invention is to be used in the manufacturing of chemical substance sensors, the forming steps of the microstructure **100** with high bonding strength are as follows:
1. Aluminum oxide or silicon is taken as the substrate **10.** Therein, the substrate **10** comprises the second dielectric layer **10b,** which is a transparent conductive dielectric film containing indium tin oxide. The first surface **11** of the second dielectric layer **10b** is prepared by evaporation or sputtering, and then undergoes an annealing process (with a 550 degrees Celsius annealing temperature) to have its surface roughness reduced, improving the film quality and reducing structural defects.
2. The substrate **10** is coated with nanoparticles of aluminum metal element or a nanoscale aluminum film as the deposition layer **20.**
3. Parts of the deposition layer **20** are removed through a high-energy particle bombardment to form an indium tin oxide dielectric film, which is connected with the exposed area **112,** as the first dielectric layer **30,** thereby forming the microstructure **100** with high bonding strength.
4. The completed microstructure **100** with high bonding strength undergoes the annealing process again (with a 550 degrees Celsius annealing temperature) to further stabilize its structure and reduce structural defects.

Due to the surface plasmon polaritons and Tamm plasmon polaritons formed by the aluminum nanoparticles on the crystal, as well as the optical Tamm state resulting from their mutual resonance, the sensor structure accordingly completed by use of the aforementioned method effectively increases the sensitivity of chemical substance detection.

For example, if the present invention is to be used in the manufacturing of light-emitting diodes (LED), the forming steps of the microstructure **100** with high bonding strength are as follows:
1. A light-emitting diode containing P-type or N-type gallium nitride or aluminum indium gallium phosphide is taken as the substrate **10.** Therein, the substrate **10** comprises the second dielectric layer **10b,** which is a transparent conductive dielectric film containing indium tin oxide. The first surface **11** of the second dielectric layer **10b** undergoes an annealing process (with a 550 degrees Celsius annealing temperature) to have its surface roughness reduced.
2. The substrate **10** is coated with nanoparticles of aluminum metal element or a nanoscale aluminum film as the deposition layer **20.**
3. Parts of the deposition layer **20** are removed through a high-energy particle bombardment to form a transparent silicon dioxide insulating dielectric film, which is connected with the exposed area **112,** as the first dielectric layer **30,** thereby forming the microstructure **100** with high bonding strength.
4. The completed microstructure **100** with high bonding strength undergoes the heating process again (with a 100 degrees Celsius to 200 degrees Celsius heating temperature) to improve the bonding strength between the second dielectric layer **10b** and the first dielectric layer **30,** so as to further stabilize the structure of the completed microstructure **100** with high bonding strength and reduce its structural defects.

Due to the surface plasmon polaritons and the Tamm plasmon polaritons formed by the aluminum nanoparticles on the crystal, as well as the optical Tamm state resulting from their mutual resonance, the light emitting diode accordingly completed by use of the aforementioned method has its lighting efficiency effectively increased.

With the foregoing configuration and method, the present invention achieves following advantages.

The connection structure **50** between the first dielectric layer **30** and the exposed area **112** of the substrate **10** allows the hotspot structure **40** formed by the deposition layer **20** and the first dielectric layer **30** to be more stably fixed to the substrate **10.** Also, due to the eutectic and bonding involving the nanoscale metal particles and the dielectric layer material, the connection structure **50** and the hotspot structure **40** are more stable, thereby achieving the objective of improving the bonding strength of the overall structure.

The connection structure **50** formed in the connection part between the first dielectric layer **30** and the exposed area **112** allows the structure of the present invention to have a higher structural strength and malleability.

The first dielectric layer **30** and the second dielectric layer **10b** are allowed to be formed with same material, so that the first dielectric layer **30** and the second dielectric layer **10b** have a higher bonding strength, further enhancing the structural strength of the present invention.

Through the surface plasmon polaritons and the Tamm plasmon polaritons formed by the nanoscale metal particles in the deposition layer **20** within the crystal, and the optical Tamm state resulting from their mutual resonance, the present invention effectively increases the efficiency in light emission or light detection sensitivity.

Using the gradient variation in the metal content caused by the covered area **111** and the exposed area **112,** the primary generation areas of the surface plasmon polaritons and the Tamm plasmon polaritons are confined, and the framework of the hotspot structure **40** forms a more stable optical Tamm state. Also, the gradual decrease in the gradient of metal content within the hotspot structure **40** from the inside toward the outside allows a directional release of energy of the optical Tamm state from the areas with high metal content to those with low metal content, significantly reducing energy consumption caused by non-directionality, thereby maximizing the structural malleability.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A microstructure (100) with high bonding strength, comprising:
a substrate (10) having a first surface (11), the first surface (11) having a covered area (111) and an exposed area (112);
a deposition layer (20) having a plurality of nanoscale metal particles, the deposition layer (20) disposed on the covered area (111) of the first surface (11), the exposed area (112) exposed from the deposition layer (20), the deposition layer (20) having a bonding face (21) on one side thereof away from the first surface (11); and
a first dielectric layer (30) disposed on the bonding face (21) and contacting the exposed area (112).

2. The microstructure (100) of claim 1, wherein the nanoscale metal particles are nanoscale metallic materials or metallic compound materials.

3. The microstructure (100) of claim 1, wherein the nanoscale metal particles form a crystal themselves or in interaction with surrounding substance molecules; a surface plasmon polariton is generated on a surface of the nanoscale metal particles, and a Tamm plasmon polariton is formed at an interface or lattice discontinuity within the crystal; the surface plasmon polariton and the Tamm plasmon polariton resonate to create an optical Tamm state.

4. The microstructure (100) of claim 1, wherein the nanoscale metal particles of the covered area (111) form a hotspot structure (40) with the first dielectric layer (30) and the substrate (10) through eutectic and bonding; the first dielectric layer (30) of the exposed area (112) contacts the substrate (10) to form a connection structure (50).

5. The microstructure (100) of claim 1, wherein the substrate (10) comprises a substrate layer (10a) and a second dielectric layer (10b); the second dielectric layer (10b) is disposed on one side of the substrate layer (10a) in adjacent to the deposition layer (20).

6. The microstructure (100) of claim 5, wherein the second dielectric layer (10b) comprises a first surface (11) on one side away from the substrate layer (10a); the exposed area (112) of the second dielectric layer (10b) is connected with the first dielectric layer (30).

7. The microstructure (100) of claim 5 or 6, wherein the nanoscale metal particles of the covered area (111) form a hotspot structure (40) with the first dielectric layer (30) and the second dielectric layer (10b) through eutectic and bonding; the first dielectric layer (30) of the exposed area (112) contacts the second dielectric layer (10b) to form a connection structure (50).

8. A method (200a) of forming a microstructure (100) with high bonding strength, comprising:
a substrate providing step (S1a): providing a substrate (10), a first surface (11) of the substrate (10) having a covered area (111) and an exposed area (112);
a deposition layer forming step (S2a): forming a deposition layer (20) having a plurality of nanoscale metal particles on the covered area (111) of the first surface (11), so that the exposed area (112) is exposed from the deposition layer (20), wherein the deposition layer (20) is formed through a method selected from a group consisting of spray coating, immersion coating, blade coating, roll coating, adsorption, and spin coating; and
a first dielectric layer forming step (S3a): forming a first dielectric layer (30) on a bonding face (21) of the deposition layer (20) away from the first surface (11), so that the first dielectric layer 30) is connected with the exposed area (112).

9. A method (200a, 200b) of forming a microstructure (100) with high bonding strength, comprising:
a substrate providing step (S1a, S1b): providing a substrate (10), the substrate (10) having a first surface (11);
a deposition layer forming step (S2a, S2b): forming a deposition layer (20) having a plurality of nanoscale metal particles on the first surface (11) of the substrate (10), wherein the deposition layer (20) is formed through a method selected from a group consisting of physical vapor deposition and chemical vapor deposition; and
a first dielectric layer forming step (S3a, S3b): forming a first dielectric layer (30) on a bonding face (21) of the deposition layer (20) away from the first surface (11), and forming an exposed area (112) exposed from the deposition layer (20) and a covered area (111) unexposed from the deposition layer (20) on the first surface (11) through a high-energy destruction method, so that the first dielectric layer (30) is connected with the exposed area (112).

10. The method (200a, 200b) of claim 8 or 9, further comprising a reaction step (S4a, S4b), wherein in the reaction step, the nanoscale metal particles form a crystal themselves or in interaction with surrounding substance molecules; a surface plasmon polariton is generated on a surface of the nanoscale metal particles, and a Tamm plasmon polariton is formed at an interface or lattice discontinuity within the crystal; the surface plasmon polariton and the Tamm plasmon polariton resonate to create an optical Tamm state.

11. The method (200a, 200b) of claim 8 or 9, wherein in the first dielectric layer forming step (S3a, S3b), the nanoscale metal particles of the covered area (111) form a hotspot structure (40) with the first dielectric layer (30) and the substrate (10) through eutectic and bonding; the first dielectric layer (30) of the exposed area (112) contacts the substrate (10) to form a connection structure (50).

12. The method (200a, 200b) of claim 8 or 9, wherein in the substrate providing step (S1a, S1b), the substrate (10) comprises a substrate layer (10a) and a second dielectric layer (10b); the second dielectric layer (10b) comprises the first surface (11) on one side thereof away from the substrate layer (10a).

13. The method (200a, 200b) of claim 12, wherein in the first dielectric layer forming step (S3a, S3b), the first dielectric layer (30) is connected with the exposed area (112) of the second dielectric layer (10b).

14. The method (200a, 200b) of claim 12 or 13, wherein in the first dielectric layer forming step (S3a, S3b), the nanoscale metal particles of the covered area (111) form a hotspot structure (40) with the first dielectric layer (30) and the second dielectric layer (10b) through eutectic and bonding; the first dielectric layer (30) of the exposed area(112) contacts the second dielectric layer (10b) to form a connection structure (50).
